# EUROPEAN PATENT SPECIFICATION

(11) **EP 2 611 055 B1**
(45) Date of publication and mention of the grant of the patent: **18.03.2020**
(21) Application number: 11819368.9
(22) Date of filing: 22.07.2011
(51) Int. Cl.: H04B 7/04, H04B 7/0456, H04B 7/06, H04B 7/10, H04L 1/06

(54) **SENDING METHOD AND DEVICE FOR 8-ANTENNA DOWNLINK CONTROL CHANNEL**
SENDEVERFAHREN UND -VORRICHTUNG FÜR EINEN 8-ANTENNEN-DOWNLINK-STEUERKANAL
PROCÉDÉ ET DISPOSITIF DE TRANSMISSION POUR UN CANAL DE CONTRÔLE SUR LA LIAISON DESCENDANTE À 8 ANTENNES

(30) Priority: 23.08.2010 CN 201010261177
(43) Date of publication of application: 03.07.2013
(73) Proprietor: China Mobile Communications Corporation, Beijing 100032 (CN)
(72) Inventor: JIANG, Dajie, Beijing 100032 (CN); HAN, Lu, Beijing 100032 (CN); WANG, Xiaozhou, Beijing 100032 (CN); HU, Lijie, Beijing 100032 (CN); ZHANG, Yong, Beijing 100032 (CN); SHI, Zhihua, Beijing 100032 (CN); LIU, Guangyi, Beijing 100032 (CN)
(74) Representative: Körfer, Thomas
(86) International application number: PCT/CN2011/077468
(87) International publication number: WO 2012/024993

(56) References cited:
- WO-A1-2010/071492
- CN-A- 101 431 357
- CN-A- 101 764 632
- US-A1- 2009 041 150
- US-A1- 2009 160 707

## Description

### Field

The present invention relates to the field of antenna technologies and in particular to a method of and apparatus for transmitting a downlink control channel on 8 antennas.

### Background

At present, a Time Division Duplex-Long Term Evolution (TD-LTE) base station of some operators adopts 8 antennas for downlink transmission, and a Frequency Division Duplex (FDD) base station may mainly adopt 2 antennas for downlink transmission. If the total transmission power of all antennas is the same for the TDD base station and the FDD base station, for example, both are 40W, then the power of each antenna among the 8 antennas of the TDD base station is 5W and the power of each antenna among the 2 antennas of the FDD base station is 20W.

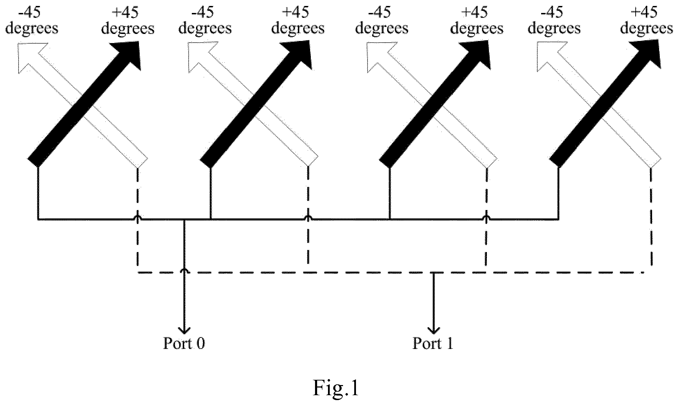

A downlink control channel of the FDD base station with 2 antennas is transmitted in a 2x2 Space Frequency Block Coding (SFBC) scheme. A downlink control channel of the TD-LTE base station with 8 antennas can be transmitted in two major categories of schemes, and the first category is a 4-port based scheme, e.g., SFBC plus Frequency Switched Transmit Diversity (FSTD). A non-negligible drawback of the 4-port scheme is that Common Reference Signals (CRSs) of the 4 ports have to be occupied, thus resulting in a considerable overhead of pilots; and the second category is a 2-port based weighted broadcast scheme, and Fig.1 illustrates a schematic diagram of the existing TD-LTE base station transmitting a downlink control channel in the weighted broadcast scheme, and as illustrated in Fig.1, this scheme continues the use of the 2-port scheme of the FDD base station, that is, the 8 antennas are grouped and virtualized in 2 antenna ports, where one port (i.e., a port 0) is virtually consisted of 4 antennas in the direction of +45 degrees, and the other port (i.e., a port 1) is virtually consisted of 4 antennas in the direction of -45 degrees, and then the downlink control channel is transmitted through 2x2 SFBC. The weighted broadcast scheme has a lower overhead of pilots than the 4-port scheme due to the use of the 2 ports. The power per port of the 2-port based weighted broadcast scheme is larger than that of the 4-port scheme. So the 2-port based weighted broadcast scheme is attractive to some extent. However in the weighted broadcast scheme, weights on some antennas among the 4 antennas of the same port are below 1, thus resulting in such a loss of power that a coverage area of a downlink control channel of the 2 antennas of the FDD base station at the same total power may not be achieved.

A document (US 2009/041150 A1) relates to a method including broadcasting, at a transmitter, messages comprising antenna configuration, antenna spacing and a number of antenna of the transmitter and reference signals; generating, at a receiver, a codebook comprising a plurality of antenna beams based on the broadcasted messages; receiving, at the receiver, the broadcasted reference signals; selecting, at the receiver, an antenna beam among the plurality of antenna beams within the codebook in dependence upon a predetermined performance criteria of a data communication system and in dependence upon the broadcasted reference signals; feedbacking to the transmitter, at the receiver, information comprising the antenna beam selected by the receiver; optimizing, at the transmitter, a beamforming process by utilizing the feedback information from the receiver; transmitting, at the transmitter, data signals by utilizing the optimized beamforming process; and receiving and processing, at the receiver, the data signals in dependence upon the selected antenna beams within the codebook.

A document (US 2009/0160707 A1) relates to a beamforming method inluding transmitting a training sequence from a transmitter array employing a set of beamforming vectors from a beamforming codebook. A receive array employs a combining codebook to acquire channel state information from the received transmissions, and estimates a preferred beamforming vector and a preferred combining vector. At least the preferred beamforming vector (and, optionally, the preferred combining vector) is transmitted back to the transmitter array.

### Summary

The invention provides methods and apparatuses for transmitting a downlink control channel so as to extend a coverage area of a downlink control channel of a base station with 8 antennas.

Technical solutions of the invention are embodied as follows:
A method of transmitting a downlink control channel on an antenna array including 8 antennas, the 8 antennas include 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas includes an antenna in a direction of +45 degree and an antenna in a direction of -45 degree, the method includes:
for the 8 antennas used by a base station for downlink transmission, virtualizing the first and third pairs of dual-polarized antennas into a first port and virtualizing the second and fourth pairs of dual-polarized antennas into a second port,
wherein broadcast weights of the 4 antennas of the first port satisfy that the weight of one of the antennas is +1 and the weights of the remaining three antennas are -1, or the weight of one of the antennas is -1 and the weights of the remaining three antennas are +1, and
broadcast weights of the 4 antennas of the second port satisfy that the weight of one of the antennas is +1 and the weights of the remaining three antennas are -1, or the weight of one of the antennas is -1 and the weights of the remaining three antennas are +1; and
the base station transmitting a downlink control signal through the first port and the second port.

The base station is a Long Term Evolution, LTE, Time Division Duplex, TDD, base station or an LTE-A TDD base station or an LTE Frequency Division Duplex, FDD, base station or an LTE-A FDD base station.

A method of transmitting a downlink control channel on an antenna array including 8 antennas, the 8 antennas include 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas includes an antenna in a direction of +45 degree and an antenna in a direction of -45 degree, the method includes:
for the 8 antennas used by a base station for downlink transmission, virtualizing the first pair and fourth pairs of dual-polarized antennas into a first port and virtualizing the second and third pairs of dual-polarized antennas into a second port,
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port.

The base station is a Long Term Evolution, LTE, Time Division Duplex, TDD, base station or an LTE-A TDD base station or an LTE Frequency Division Duplex, FDD, base station or an LTE-A FDD base station.

A method of transmitting a downlink control channel on an antenna array including 8 antennas, the 8 antennas include 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas includes an antenna in a direction of +45 degree and an antenna in a direction of -45 degree, the method includes:
for the 8 antennas used by a base station for downlink transmission, virtualizing the antennas in the direction of +45 degrees among the first and second pairs of dual-polarized antennas and the antennas in the direction of -45 degrees among the third and fourth pairs of dual-polarized antennas into a first port and virtualizing the antennas in the direction of -45 degrees among the first and second pairs of dual-polarized antennas and the antennas in the direction of +45 degrees among the third and fourth pairs of dual-polarized antennas into a second port,
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port.

The base station is a Long Term Evolution, LTE, Time Division Duplex, TDD, base station or an LTE-A TDD base station or an LTE Frequency Division Duplex, FDD, base station or an LTE-A FDD base station.

A method of transmitting a downlink control channel on an antenna array including 8 antennas, the 8 antennas include 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas includes an antenna in a direction of +45 degree and an antenna in a direction of -45 degree, the method includes:
for the 8 antennas used by a base station for downlink transmission, virtualizing the antennas in the direction of +45 degrees among the first and third pairs of dual-polarized antennas and the antennas in the direction of -45 degrees among the second and fourth pairs of dual-polarized antennas into a first port and virtualizing the antennas in the direction of -45 degrees among the first and third pairs of dual-polarized antennas and the antennas in the direction of +45 degrees among the second and fourth pairs of dual-polarized antennas into a second port,
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port.

The base station is a Long Term Evolution, LTE, Time Division Duplex, TDD, base station or an LTE-A TDD base station or an LTE Frequency Division Duplex, FDD, base station or an LTE-A FDD base station.

A method of transmitting a downlink control channel on an antenna array including 8 antennas, the 8 antennas include 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas includes an antenna in a direction of +45 degree and an antenna in a direction of -45 degree, the method includes:
for the 8 antennas used by a base station for downlink transmission, virtualizing the antennas in the direction of +45 degrees among the first and fourth pairs of dual-polarized antennas and the antennas in the direction of -45 degrees among the second and third pairs of dual-polarized antennas into a first port and virtualizing the antennas in the direction of -45 degrees among the first and fourth pairs of dual-polarized antennas and the antennas in the direction of +45 degrees among the second and third pairs of dual-polarized antennas into a second port,
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port.

The base station is a Long Term Evolution, LTE, Time Division Duplex, TDD, base station or an LTE-A TDD base station or an LTE Frequency Division Duplex, FDD, base station or an LTE-A FDD base station.

An apparatus for transmitting a downlink control channel on an antenna array including 8 antennas, the 8 antennas are suitable for being used by a base station for downlink transmission and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas comprises an antenna in a direction of +45 degree and an antenna in a direction of -45 degree, the apparatus includes:
a port grouping module configured to virtualize the first and third pairs of dual-polarized antennas into a first port and virtualize the second and fourth pairs of dual-polarized antennas into a second port, wherein broadcast weights of the 4 antennas of the first port satisfy that the weight of one of the antennas is +1 and the weights of the remaining three antennas are -1, or the weight of one of the antennas is -1 and the weights of the remaining three antennas are +1; and broadcast weights of the 4 antennas of the second port satisfy that the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

The apparatus is located on a Long Term Evolution, LTE, Time Division Duplex, TDD, base station or on an LTE-A TDD base station or on an LTE Frequency Division Duplex, FDD, base station or on an LTE-A FDD base station.

An apparatus for transmitting a downlink control channel on an antenna array including 8 antennas, the 8 antennas are suitable for being used by a base station for downlink transmission and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas comprises an antenna in a direction of +45 degree and an antenna in a direction of -45 degree, the apparatus includes:
a port grouping module configured to virtualize the first and fourth pairs of dual-polarized antennas into a first port and virtualize the second and third pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

The apparatus is located on a Long Term Evolution, LTE, Time Division Duplex, TDD, base station or on an LTE-A TDD base station or on an LTE Frequency Division Duplex, FDD, base station or on an LTE-A FDD base station.

An apparatus for transmitting a downlink control channel on an antenna array including 8 antennas, the 8 antennas are suitable for being used by a base station for downlink transmission and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array , the apparatus includes:
a port grouping module configured to virtualize the antennas in the direction of +45 degrees among the first and second pairs of dual-polarized antennas and the antennas in the direction of -45 degrees among the third and fourth pairs of dual-polarized antennas into a first port and virtualize the antennas in the direction of -45 degrees among the first and second pairs of dual-polarized antennas and the antennas in the direction of +45 degrees among the third and fourth pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

The apparatus is located on a Long Term Evolution, LTE, Time Division Duplex, TDD, base station or on an LTE-A TDD base station or on an LTE Frequency Division Duplex, FDD, base station or on an LTE-A FDD base station.

An apparatus for transmitting a downlink control channel on an antenna array including 8 antennas, the 8 antennas are suitable for being used by a base station for downlink transmission and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the apparatus includes:
a port grouping module is configured to virtualize the antennas in the direction of +45 degrees among the first and third pairs of dual-polarized antennas and the antennas in the direction of -45 degrees among the second and fourth pairs of dual-polarized antennas into a first port and virtualize the antennas in the direction of -45 degrees among the first and third pairs of dual-polarized antennas and the antennas in the direction of +45 degrees among the second and fourth pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

The apparatus is located on a Long Term Evolution, LTE, Time Division Duplex, TDD, base station or on an LTE-A TDD base station or on an LTE Frequency Division Duplex, FDD, base station or on an LTE-A FDD base station.

An apparatus for transmitting a downlink control channel on an antenna array including 8 antennas, the 8 antennas are suitable for being used by a base station for downlink transmission and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the apparatus includes:
a port grouping module is configured to virtualize the antennas in the direction of +45 degrees among the first and fourth pairs of dual-polarized antennas and the antennas in the direction of -45 degrees among the second and third pairs of dual-polarized antennas into a first port and virtualize the antennas in the direction of -45 degrees among the first and fourth pairs of dual-polarized antennas and the antennas in the direction of +45 degrees among the second and third pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

The apparatus is located on a Long Term Evolution, LTE, Time Division Duplex, TDD, base station or on an LTE-A TDD base station or on an LTE Frequency Division Duplex, FDD, base station or on an LTE-A FDD base station.

The invention can extend a coverage area of a downlink control channel of a base station with 8 antennas as a whole in comparison with the prior art.

### Brief Description of the Drawings

In order to further elucidate technical solutions of embodiments of the invention or in the prior art, the drawings to be used in a description of the embodiments or the prior art will be introduced briefly, and obviously the drawings to be described below illustrate only some of the embodiments of the invention, and those ordinarily skilled in the art can further derive from these drawings other drawings without any inventive effort.
Fig.1 is a schematic diagram of the existing TD-LTE base station transmitting a downlink control channel in the weighted broadcast scheme;
Fig.2 is a flow chart of a method of a base station with 8 antennas to transmit a downlink control channel according to a first embodiment of the invention;
Fig.3 is a schematic diagram of a scheme of the base station with 8 antennas to transmit a downlink control channel according to the first embodiment of the invention;
Fig.4 is a flow chart of a method of a base station with 8 antennas to transmit a downlink control channel according to a second embodiment of the invention;
Fig.5 is a schematic diagram of a scheme of the base station with 8 antennas to transmit a downlink control channel according to the second embodiment of the invention;
Fig.6 is a flow chart of a method of a base station with 8 antennas to transmit a downlink control channel according to a third embodiment of the invention;
Fig.7 is a schematic diagram of a scheme of the base station with 8 antennas to transmit a downlink control channel according to the third embodiment of the invention;
Fig.8 is a flow chart of a method of a base station with 8 antennas to transmit a downlink control channel according to a fourth embodiment of the invention;
Fig.9 is a schematic diagram of a scheme of the base station with 8 antennas to transmit a downlink control channel according to the fourth embodiment of the invention;
Fig.10 is a flow chart of a method of a base station with 8 antennas to transmit a downlink control channel according to a fifth embodiment of the invention;
Fig.11 is a schematic diagram of a scheme of the base station with 8 antennas to transmit a downlink control channel according to the fifth embodiment of the invention;
Fig.12 is a flow chart of a method of a base station with 8 antennas to transmit a downlink control channel according to a sixth aspect of the invention;
Fig.13 is a schematic diagram of a scheme of the base station with 8 antennas to transmit a downlink control channel according to the sixth aspect of the invention;
Fig.14 is a schematic diagram of components of an apparatus for transmitting a downlink control channel on 8 antennas according to the first embodiment of the invention; and
Fig.15 is a comparison diagram of simulation graphs of the first to fifth embodiments and of the sixth aspect of the invention and the existing weighted broadcast scheme.

### Detailed Description of the Embodiments

The invention will be further detailed below with reference to the drawings and embodiments thereof.

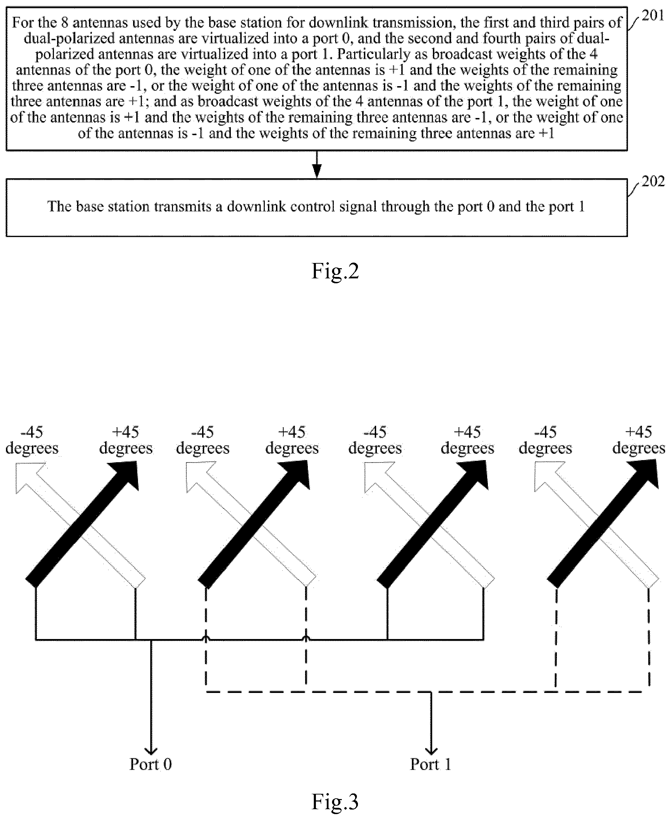

Fig.2 is a flow chart of a method of a base station with 8 antennas to transmit a downlink control channel according to a first embodiment of the invention, and as illustrated in Fig.2, particular steps thereof are as follows:

Step 201: for the 8 antennas used by the base station for downlink transmission, the first and third pairs of dual-polarized antennas are virtualized into a port 0, and the second and fourth pairs of dual-polarized antennas are virtualized into a port 1. Particularly as broadcast weights of the 4 antennas of the port 0, the weight of one of the antennas is +1 and the weights of the remaining three antennas are -1, or the weight of one of the antennas is -1 and the weights of the remaining three antennas are +1; and as broadcast weights of the 4 antennas of the port 1, the weight of one of the antennas is +1 and the weights of the remaining three antennas are -1, or the weight of one of the antennas is -1 and the weights of the remaining three antennas are +1.

Fig.3 is a schematic diagram of a scheme of the base station with 8 antennas to transmit a downlink control channel according to the first embodiment of the invention.

Step 202: the base station transmits a downlink control signal through the port 0 and the port 1.

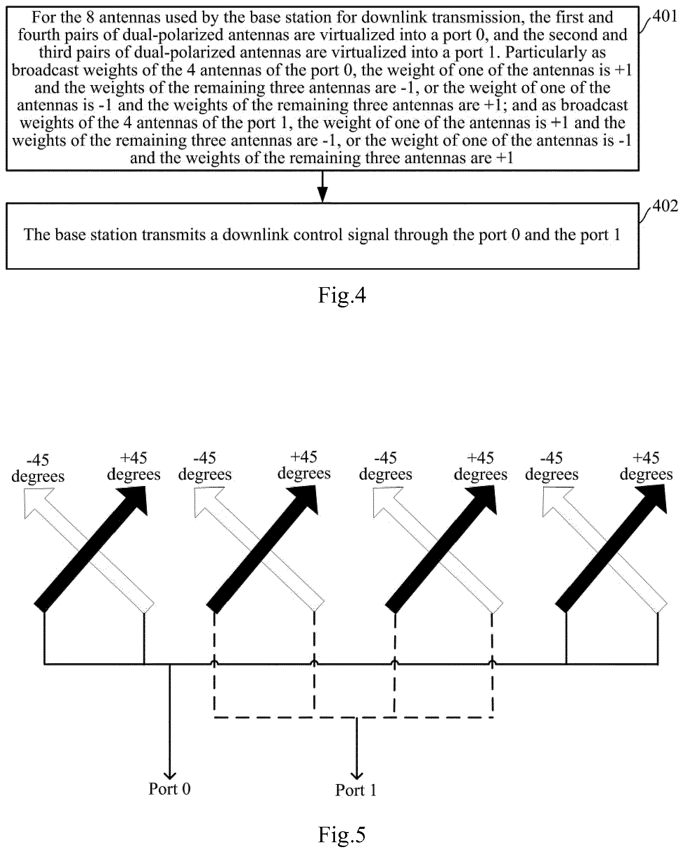

Fig.4 is a flow chart of a method of a base station with 8 antennas to transmit a downlink control channel according to a second embodiment of the invention, and as illustrated in Fig.4, particular steps thereof are as follows:
Step 401: for the 8 antennas used by the base station for downlink transmission, the first and fourth pairs of dual-polarized antennas are virtualized into a port 0, and the second and third pairs of dual-polarized antennas are virtualized into a port 1. Particularly as broadcast weights of the 4 antennas of the port 0, the weight of one of the antennas is +1 and the weights of the remaining three antennas are -1, or the weight of one of the antennas is -1 and the weights of the remaining three antennas are +1; and as broadcast weights of the 4 antennas of the port 1, the weight of one of the antennas is +1 and the weights of the remaining three antennas are -1, or the weight of one of the antennas is -1 and the weights of the remaining three antennas are +1.

Fig.5 is a schematic diagram of a scheme of the base station with 8 antennas to transmit a downlink control channel according to the second embodiment of the invention.

Step 402: the base station transmits a downlink control signal through the port 0 and the port 1.

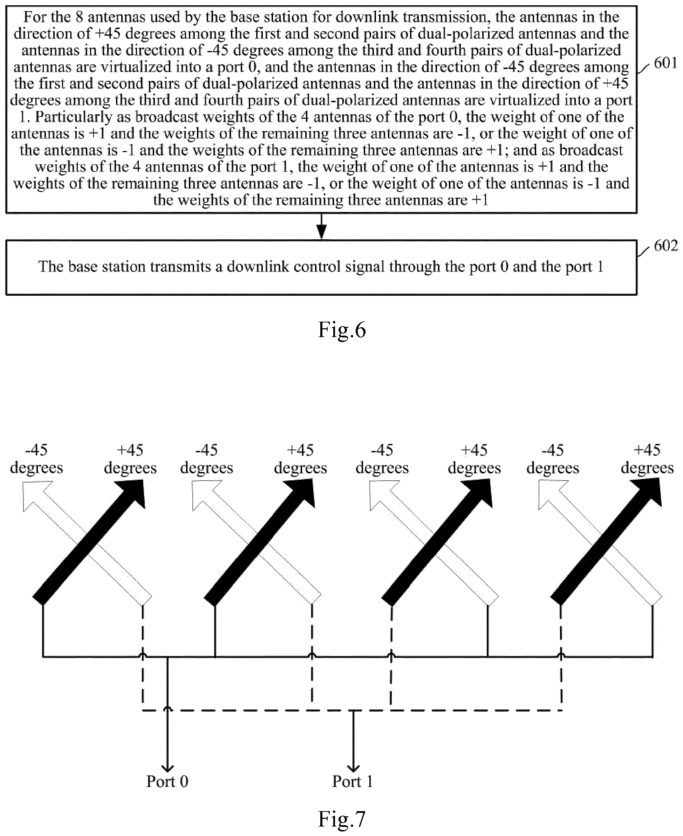

Fig.6 is a flow chart of a method of a base station with 8 antennas to transmit a downlink control channel according to a third embodiment of the invention, and as illustrated in Fig.6, particular steps thereof are as follows:
Step 601: for the 8 antennas used by the base station for downlink transmission, the antennas in the direction of +45 degrees among the first and second pairs of dual-polarized antennas and the antennas in the direction of -45 degrees among the third and fourth pairs of dual-polarized antennas are virtualized into a port 0, and the antennas in the direction of -45 degrees among the first and second pairs of dual-polarized antennas and the antennas in the direction of +45 degrees among the third and fourth pairs of dual-polarized antennas are virtualized into a port 1. Particularly as broadcast weights of the 4 antennas of the port 0, the weight of one of the antennas is +1 and the weights of the remaining three antennas are -1, or the weight of one of the antennas is -1 and the weights of the remaining three antennas are +1; and as broadcast weights of the 4 antennas of the port 1, the weight of one of the antennas is +1 and the weights of the remaining three antennas are -1, or the weight of one of the antennas is -1 and the weights of the remaining three antennas are +1.

Fig.7 is a schematic diagram of a scheme of the base station with 8 antennas to transmit a downlink control channel according to the third embodiment of the invention.

Step 602: the base station transmits a downlink control signal through the port 0 and the port 1.

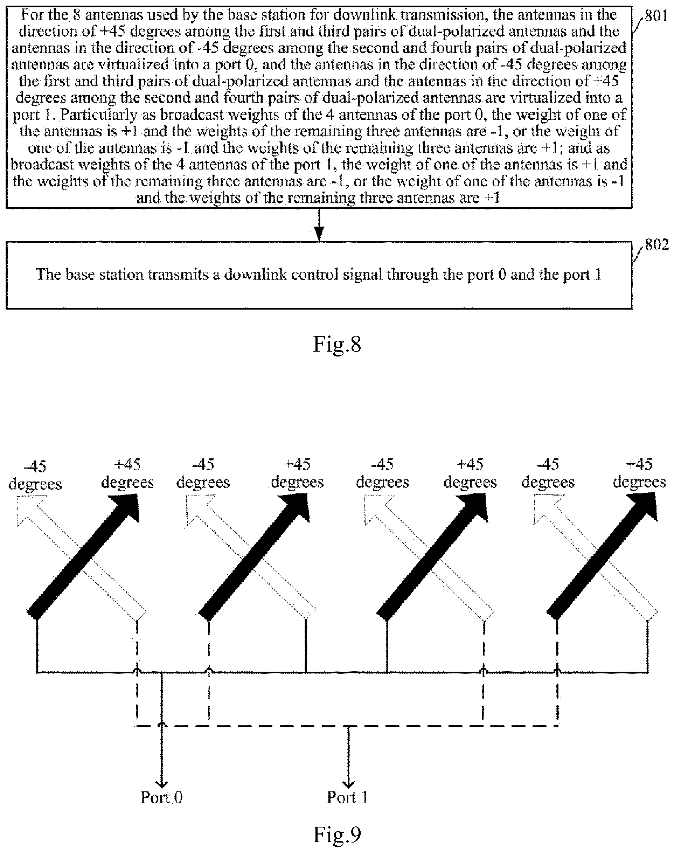

Fig.8 is a flow chart of a method of a base station with 8 antennas to transmit a downlink control channel according to a fourth embodiment of the invention, and as illustrated in Fig.8, particular steps thereof are as follows:
Step 801: for the 8 antennas used by the base station for downlink transmission, the antennas in the direction of +45 degrees among the first and third pairs of dual-polarized antennas and the antennas in the direction of -45 degrees among the second and fourth pairs of dual-polarized antennas are virtualized into a port 0, and the antennas in the direction of -45 degrees among the first and third pairs of dual-polarized antennas and the antennas in the direction of +45 degrees among the second and fourth pairs of dual-polarized antennas are virtualized into a port 1. Particularly as broadcast weights of the 4 antennas of the port 0, the weight of one of the antennas is +1 and the weights of the remaining three antennas are -1, or the weight of one of the antennas is -1 and the weights of the remaining three antennas are +1; and as broadcast weights of the 4 antennas of the port 1, the weight of one of the antennas is +1 and the weights of the remaining three antennas are -1, or the weight of one of the antennas is -1 and the weights of the remaining three antennas are +1.

Fig.9 is a schematic diagram of a scheme of the base station with 8 antennas to transmit a downlink control channel according to the fourth embodiment of the invention.

Step 802: the base station transmits a downlink control signal through the port 0 and the port 1.

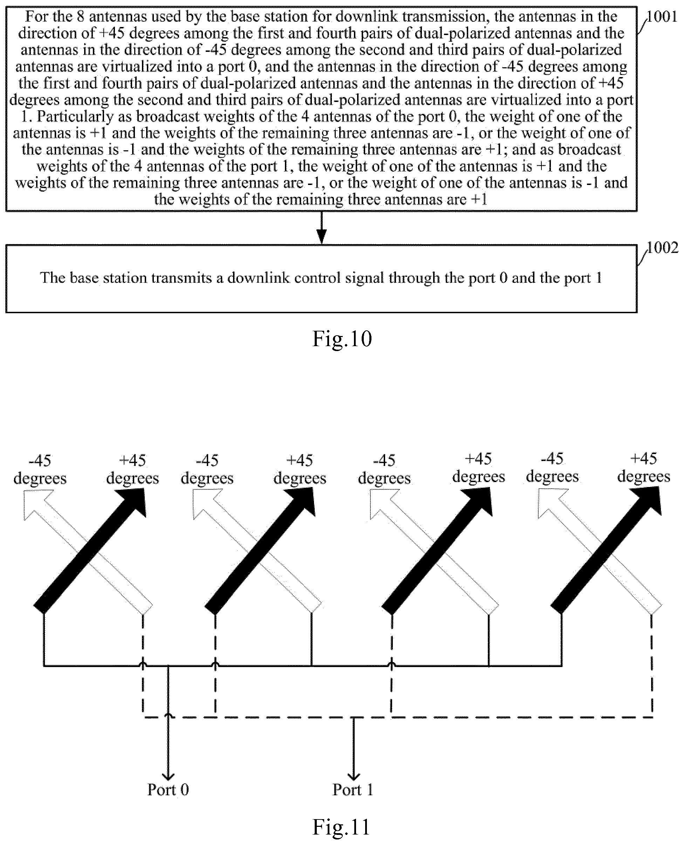

Fig.10 is a flow chart of a method of a base station with 8 antennas to transmit a downlink control channel according to a fifth embodiment of the invention, and as illustrated in Fig.10, particular steps thereof are as follows:

Step 1001: for the 8 antennas used by the base station for downlink transmission, the antennas in the direction of +45 degrees among the first and fourth pairs of dual-polarized antennas and the antennas in the direction of -45 degrees among the second and third pairs of dual-polarized antennas are virtualized into a port 0, and the antennas in the direction of -45 degrees among the first and fourth pairs of dual-polarized antennas and the antennas in the direction of +45 degrees among the second and third pairs of dual-polarized antennas are virtualized into a port 1. Particularly as broadcast weights of the 4 antennas of the port 0, the weight of one of the antennas is +1 and the weights of the remaining three antennas are -1, or the weight of one of the antennas is -1 and the weights of the remaining three antennas are +1; and as broadcast weights of the 4 antennas of the port 1, the weight of one of the antennas is +1 and the weights of the remaining three antennas are -1, or the weight of one of the antennas is -1 and the weights of the remaining three antennas are +1.

Fig.11 is a schematic diagram of a scheme of the base station with 8 antennas to transmit a downlink control channel according to the fifth embodiment of the invention.

Step 1002: the base station transmits a downlink control signal through the port 0 and the port 1.

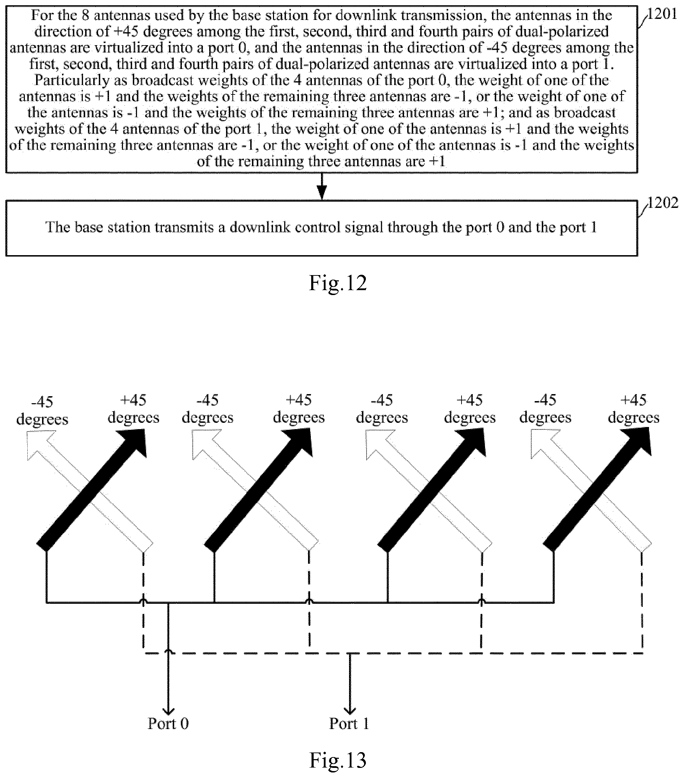

Fig.12 is a flow chart of a method of a base station with 8 antennas to transmit a downlink control channel according to a sixth aspect of the invention, and as illustrated in Fig.12, particular steps thereof are as follows:
Step 1201: for the 8 antennas used by the base station for downlink transmission, the antennas in the direction of +45 degrees among the first, second, third and fourth pairs of dual-polarized antennas are virtualized into a port 0, and the antennas in the direction of -45 degrees among the first, second, third and fourth pairs of dual-polarized antennas are virtualized into a port 1. Particularly as broadcast weights of the 4 antennas of the port 0, the weight of one of the antennas is +1 and the weights of the remaining three antennas are -1, or the weight of one of the antennas is -1 and the weights of the remaining three antennas are +1; and as broadcast weights of the 4 antennas of the port 1, the weight of one of the antennas is +1 and the weights of the remaining three antennas are -1, or the weight of one of the antennas is -1 and the weights of the remaining three antennas are +1.

Fig.13 is a schematic diagram of a scheme of the base station with 8 antennas to transmit a downlink control channel according to the sixth aspect of the invention.

Step 1202: the base station transmits a downlink control signal through the port 0 and the port 1.

It shall be noted that for the port 0 and the port 1 in any of the embodiments of the invention, the weights of the 4 antennas of these two ports may be the same or may be different. For example, for the port 1, the weights of the 4 antennas of the port 1 may be exactly the same as or may be different from the weights of the 4 antennas of the port 0.

The base station in the first to fifth embodiment of the invention can be an LTE TDD base station or an LTE-A TDD base station or an LTE FDD base station or an LTE-A FDD base station.

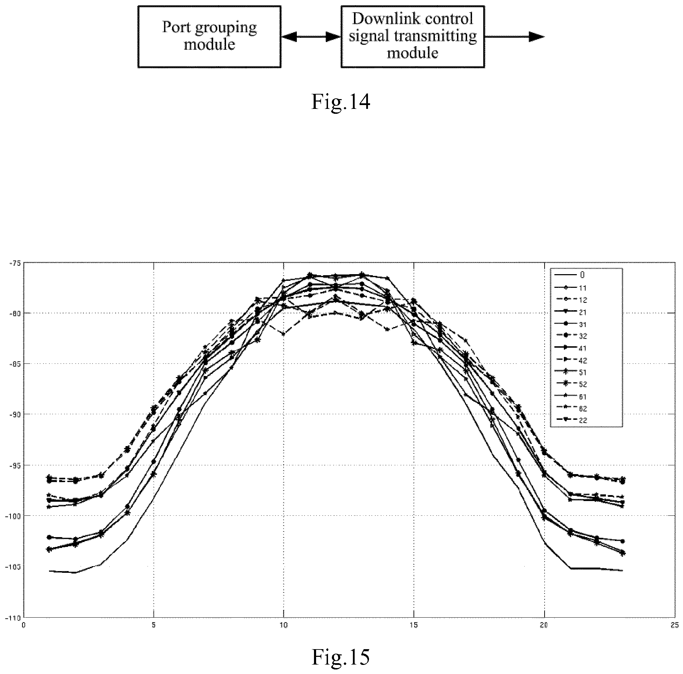

Fig.14 is a schematic diagram of components of an apparatus for transmitting a downlink control channel on 8 antennas according to the first embodiment of the invention, and as illustrated in Fig.14, it generally includes a port grouping module and a downlink control signal transmitting module, where:

The port grouping module is configured, for the 8 antennas used by a base station for downlink transmission, to virtualize the first and third pairs of dual-polarized antennas into a first port and virtualize the second and fourth pairs of dual-polarized antennas into a second port, where broadcast weights of the 4 antennas of the first port satisfy that the weight of one of the antennas is +1 and the weights of the remaining three antennas are -1, or the weight of one of the antennas is -1 and the weights of the remaining three antennas are +1; and broadcast weights of the 4 antennas of the second port satisfy that the weight of one of the antennas is +1 and the weights of the remaining three antennas are -1, or the weight of one of the antennas is -1 and the weights of the remaining three antennas are +1; and to record correspondences between numbers of the respective ports and identifiers of the antennas and record the broadcast weights of the respective antennas included in the respective ports.

The downlink control signal transmitting module is configured to transmit a downlink control signal through the first port and the second port according to the correspondences between the numbers of respective ports and the identifiers of the antennas and the broadcast weights of the respective antennas included in the respective ports recorded by the port grouping module.

The apparatus illustrated in Fig.14 can be located on an LTE TDD base station or on an LTE-A TDD base station or on an LTE FDD base station or on an LTE-A FDD base station.

There will be given below components of an apparatus for transmitting a downlink control channel on 8 antennas according to the second embodiment of the invention, and it generally includes a port grouping module and a downlink control signal transmitting module, where:

The port grouping module is configured, for the 8 antennas used by a base station for downlink transmission, to virtualize the first and fourth pairs of dual-polarized antennas into a first port and virtualize the second and third pairs of dual-polarized antennas into a second port, where as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and to record correspondences between numbers of the respective ports and identifiers of the antennas and record the broadcast weights of the respective antennas included in the respective ports.

The downlink control signal transmitting module is configured to transmit a downlink control signal through the first port and the second port according to the correspondences between the numbers of respective ports and the identifiers of the antennas and the broadcast weights of the respective antennas included in the respective ports recorded by the port grouping module.

The apparatus according to the second embodiment of the invention can be located on an LTE TDD base station or on an LTE-A TDD base station or on an LTE FDD base station or on an LTE-A FDD base station.

There will be given below components of an apparatus for transmitting a downlink control channel on 8 antennas according to the third embodiment of the invention, and it generally includes a port grouping module and a downlink control signal transmitting module, where:

The port grouping module is configured, for the 8 antennas used by a base station for downlink transmission, to virtualize the antennas in the direction of +45 degrees among the first and second pairs of dual-polarized antennas and the antennas in the direction of -45 degrees among the third and fourth pairs of dual-polarized antennas into a first port and virtualize the antennas in the direction of -45 degrees among the first and second pairs of dual-polarized antennas and the antennas in the direction of +45 degrees among the third and fourth pairs of dual-polarized antennas into a second port, where as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and to record correspondences between numbers of the respective ports and identifiers of the antennas and record the broadcast weights of the respective antennas included in the respective ports.

The downlink control signal transmitting module is configured to transmit a downlink control signal through the first port and the second port according to the correspondences between the numbers of respective ports and the identifiers of the antennas and the broadcast weights of the respective antennas included in the respective ports recorded by the port grouping module.

The apparatus according to the third embodiment of the invention can be located on an LTE TDD base station or on an LTE-A TDD base station or on an LTE FDD base station or on an LTE-A FDD base station.

There will be given below components of an apparatus for transmitting a downlink control channel on 8 antennas according to the fourth embodiment of the invention, and it generally includes a port grouping module and a downlink control signal transmitting module, where:

The port grouping module is configured, for the 8 antennas used by a base station for downlink transmission, to virtualize the antennas in the direction of +45 degrees among the first and third pairs of dual-polarized antennas and the antennas in the direction of -45 degrees among the second and fourth pairs of dual-polarized antennas into a first port and virtualize the antennas in the direction of -45 degrees among the first and third pairs of dual-polarized antennas and the antennas in the direction of +45 degrees among the second and fourth pairs of dual-polarized antennas into a second port, where as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and to record correspondences between numbers of the respective ports and identifiers of the antennas and record the broadcast weights of the respective antennas included in the respective ports.

The downlink control signal transmitting module is configured to transmit a downlink control signal through the first port and the second port according to the correspondences between the numbers of respective ports and the identifiers of the antennas and the broadcast weights of the respective antennas included in the respective ports recorded by the port grouping module.

The apparatus according to the fourth embodiment of the invention can be located on an LTE TDD base station or on an LTE-A TDD base station or on an LTE FDD base station or on an LTE-A FDD base station.

There will be given below components of an apparatus for transmitting a downlink control channel on 8 antennas according to the fifth embodiment of the invention, and it generally includes a port grouping module and a downlink control signal transmitting module, where:

The port grouping module is configured, for the 8 antennas used by a base station for downlink transmission, to virtualize the antennas in the direction of +45 degrees among the first and fourth pairs of dual-polarized antennas and the antennas in the direction of -45 degrees among the second and third pairs of dual-polarized antennas into a first port and virtualize the antennas in the direction of -45 degrees among the first and fourth pairs of dual-polarized antennas and the antennas in the direction of +45 degrees among the second and third pairs of dual-polarized antennas into a second port, where as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and to record correspondences between numbers of the respective ports and identifiers of the antennas and record the broadcast weights of the respective antennas included in the respective ports.

The downlink control signal transmitting module is configured to transmit a downlink control signal through the first port and the second port according to the correspondences between the numbers of respective ports and the identifiers of the antennas and the broadcast weights of the respective antennas included in the respective ports recorded by the port grouping module.

The apparatus according to the fifth embodiment of the invention can be located on an LTE TDD base station or on an LTE-A TDD base station or on an LTE FDD base station or on an LTE-A FDD base station.

There will be given below components of an apparatus for transmitting a downlink control channel on 8 antennas according to the sixth aspect of the invention, and it generally includes a port grouping module and a downlink control signal transmitting module, where:

The port grouping module is configured, for the 8 antennas used by a base station for downlink transmission, to virtualize the antennas in the direction of +45 degrees among the first, second, third and fourth pairs of dual-polarized antennas into a first port and virtualize the antennas in the direction of -45 degrees among the first, second, third and fourth pairs of dual-polarized antennas into a second port, where as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and to record correspondences between numbers of the respective ports and identifiers of the antennas and record the broadcast weights of the respective antennas included in the respective ports.

The downlink control signal transmitting module is configured to transmit a downlink control signal through the first port and the second port according to the correspondences between the numbers of respective ports and the identifiers of the antennas and the broadcast weights of the respective antennas included in the respective ports recorded by the port grouping module.

The apparatus according to the sixth aspect of the invention can be located on an LTE TDD base station or on an LTE-A TDD base station or on an LTE FDD base station or on an LTE-A FDD base station.

Experiments have demonstrated that the method of transmitting a downlink control channel on 8 antennas according to the invention can enable the performance of the downlink control channel to reach and even exceed the performance of a downlink control channel on 2 antennas of an LTE FDD base station.

The methods according to the five embodiments and the sixth aspect of the invention and the existing weighted broadcast method will be compared in the same simulation scenario as given below:

A simulation condition is as follows:
The simulation scenario is a 2D antenna scenario 1 of the Third Generation Partnership Project (3GPP Scenario 1-2D). A base station is assumed as a TD-LTE base station with downlink transmission on 8 (4 pairs of) dual-polarized antennas with two adjacent pairs of antennas being spaced at an interval of half a wavelength; and a User Equipment (UE) is assumed with 2 homo-polarized antennas spaced at an interval of half a wavelength.

No consideration of the influence of shadow fading is assumed.

A simulation process is as follows:
A TD-LTE base station is selected, and at a distance of 100 meters from the TD-LTE base station, there is a corresponding UE spaced at each interval of 10 degrees from a major lobe to each side of an antenna in a sector of the TD-LTE base station. Considering rapid fading, the magnitudes of the power of a downlink control signal received on two antennas of each UE from each port of the TD-LTE base station, i.e., the port 0 and the port 1, are recorded respectively for each of the schemes including the six schemes according to the first to fifth embodiments and the sixth aspect of the invention and the existing weighted broadcast scheme. The sum of the power of the downlink control signal received on two antennas of each UE over a predetermined period of time from each port of the TD-LTE base station, i.e., the port 0 and the port 1, is linearly averaged for each of the schemes.

Fig.15 illustrates a comparison diagram of simulation results, where the abscissa is scaled in unit of 10 degrees, and since there is a corresponding UE spaced at each interval of 10 degrees from a major lobe to each side of an antenna in a sector of the TD-LTE base station, each integer point on the abscissa in Fig.15 represents a UE, and there are 25 UEs in total, where an integer point closer to the center is located closer to the major lobe of the antenna; and the ordinate represents the linearly averaged sum in unit of dbm of the power of the downlink control signal received on two antennas of a UE from the port 0 of the TD-LTE base station over a predetermined period of time.

Corresponding schemes are indicated at the top right corner of Fig. 15, where:
Scheme 0: the existing weighted broadcast scheme, that is, the port 0 is virtually consisted of 4 antennas in the direction of +45 degrees, and the port 1 is virtually consisted of 4 antennas in the direction of -45 degrees; and broadcast weights of the 4 antennas of the port 0 are [-0.6230-0.0025j, 1.0, 1.0, 0.2986-0.0020j], and broadcast weights of the 4 antennas of the port 1 are also [-0.6230-0.0025j, 1.0, 1.0, 0.2986-0.0020j].
Scheme 11: the first embodiment of the invention, where weights of 4 antennas of each of the ports 0 and 1 are [1, 1, 1, -1].
Scheme 12: the first embodiment of the invention, where weights of 4 antennas of each of the ports 0 and 1 are [1, -1, 1, 1].
Scheme21: the second embodiment of the invention, where weights of 4 antennas of each of the ports 0 and 1 are [1, 1, 1, -1].
Scheme22: the second embodiment of the invention, where weights of 4 antennas of each of the ports 0 and 1 are [1,-1, 1, 1].
Scheme31: the third embodiment of the invention, where weights of 4 antennas of each of the ports 0 and 1 are [1, 1, 1, -1].
Scheme32: the third embodiment of the invention, where weights of 4 antennas of each of the ports 0 and 1 are [1,-1, 1, 1].
Scheme41: the fourth embodiment of the invention, where weights of 4 antennas of each of the ports 0 and 1 are [1, 1, 1, -1].
Scheme42: the fourth embodiment of the invention, where weights of 4 antennas of each of the ports 0 and 1 are [1,-1, 1, 1].
Scheme51: the fifth embodiment of the invention, where weights of 4 antennas of each of the ports 0 and 1 are [1, 1, 1, -1].
Scheme52: the fifth embodiment of the invention, where weights of 4 antennas of each of the ports 0 and 1 are [1,-1, 1, 1].
Scheme61: the sixth aspect of the invention, where weights of 4 antennas of each of the ports 0 and 1 are [1, 1, 1, -1].
Scheme62: the sixth aspect of the invention, where weights of 4 antennas of each of the ports 0 and 1 are [1, -1, 1, 1].

As can be apparent from Fig.15, the six schemes according to the embodiments and to the sixth aspect of the invention have better overall downlink control performance as a whole than the existing weighted broadcast scheme, although the existing weighted broadcast scheme has better downlink control performance than the six schemes according to the embodiments and to the sixth aspect of the invention around the major lobe of the antenna of a sector of the TD-LTE base station.

## Claims

1. A method of transmitting a downlink control channel on an antenna array comprising 8 antennas, wherein the 8 antennas comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas comprises an antenna in a direction of +45 degree and an antenna in a direction of -45 degree, the method comprising:
for the 8 antennas used by a base station for downlink transmission, virtualizing the first and third pairs of dual-polarized antennas into a first port and virtualizing the second and fourth pairs of dual-polarized antennas into a second port (201),
wherein broadcast weights of the 4 antennas of the first port satisfy that the weight of one of the antennas is +1 and the weights of the remaining three antennas are -1, or the weight of one of the antennas is -1 and the weights of the remaining three antennas are +1, and
broadcast weights of the 4 antennas of the second port satisfy that the weight of one of the antennas is +1 and the weights of the remaining three antennas are -1, or the weight of one of the antennas is -1 and the weights of the remaining three antennas are +1; and
the base station transmitting a downlink control signal through the first port and the second port (202).

2. A method of transmitting a downlink control channel on an antenna array comprising 8 antennas, wherein the 8 antennas comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas comprises an antenna in a direction of +45 degree and an antenna in a direction of -45 degree, the method comprising:
for the 8 antennas used by a base station for downlink transmission, virtualizing the first and fourth pairs of dual-polarized antennas into a first port and virtualizing the second and third pairs of dual-polarized antennas into a second port (401),
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port (402).

3. A method of transmitting a downlink control channel on an antenna array comprising 8 antennas, wherein the 8 antennas comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the method comprising:
for the 8 antennas used by a base station for downlink transmission, virtualizing the antennas in the direction of +45 degrees among the first and second pairs of dual-polarized antennas and the antennas in the direction of -45 degrees among the third and fourth pairs of dual-polarized antennas into a first port and virtualizing the antennas in the direction of -45 degrees among the first and second pairs of dual-polarized antennas and the antennas in the direction of +45 degrees among the third and fourth pairs of dual-polarized antennas into a second port (601), wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port (602).

4. A method of transmitting a downlink control channel on an antenna array comprising 8 antennas, wherein the 8 antennas comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the method comprising:
for the 8 antennas used by a base station for downlink transmission, virtualizing the antennas in the direction of +45 degrees among the first and third pairs of dual-polarized antennas and the antennas in the direction of -45 degrees among the second and fourth pairs of dual-polarized antennas into a first port and virtualizing the antennas in the direction of -45 degrees among the first and third pairs of dual-polarized antennas and the antennas in the direction of +45 degrees among the second and fourth pairs of dual-polarized antennas into a second port (801),
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port (802).

5. A method of transmitting a downlink control channel on an antenna array comprising 8 antennas, wherein the 8 antennas comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the method comprising:
for the 8 antennas used by a base station for downlink transmission, virtualizing the antennas in the direction of +45 degrees among the first and fourth pairs of dual-polarized antennas and the antennas in the direction of -45 degrees among the second and third pairs of dual-polarized antennas into a first port and virtualizing the antennas in the direction of -45 degrees among the first and fourth pairs of dual-polarized antennas and the antennas in the direction of +45 degrees among the second and third pairs of dual-polarized antennas into a second port (1001),
wherein as broadcast weights of the 4 antennas of the first port, the weight of one of the antennas is +1 and the weights of the remaining three antennas are -1, or the weight of one of the antennas is -1 and the weights of the remaining three antennas are +1, and
as broadcast weights of the 4 antennas of the second port, the weight of one of the antennas is +1 and the weights of the remaining three antennas are -1, or the weight of one of the antennas is -1 and the weights of the remaining three antennas are +1; and
the base station transmitting a downlink control signal through the first port and the second port (1002).

6. An apparatus for transmitting a downlink control channel on an antenna array comprising 8 antennas, wherein the 8 antennas are suitable for being used by a base station for downlink transmission and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas comprises an antenna in a direction of +45 degree and an antenna in a direction of -45 degree, the apparatus comprising:
a port grouping module configured to virtualize the first and third pairs of dual-polarized antennas into a first port and virtualize the second and fourth pairs of dual-polarized antennas into a second port, wherein broadcast weights of the 4 antennas of the first port satisfy that the weight of one of the antennas is +1 and the weights of the remaining three antennas are -1, or the weight of one of the antennas is -1 and the weights of the remaining three antennas are +1; and broadcast weights of the 4 antennas of the second port satisfy that the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

7. A base station comprising the apparatus of claim 6, wherein the base station is a Long Term Evolution, LTE, Time Division Duplex, TDD, base station or an LTE-A TDD base station or an LTE Frequency Division Duplex, FDD, base station or an LTE-A FDD base station.

8. An apparatus for transmitting a downlink control channel on an antenna array comprising 8 antennas, wherein the 8 antennas are suitable for being used by a base station and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, each pair of dual-polarized antennas comprises an antenna in a direction of +45 degree and an antenna in a direction of -45 degree, the apparatus comprising:
a port grouping module configured to virtualize the first and fourth pairs of dual-polarized antennas into a first port and virtualize the second and third pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

9. A base station comprising the apparatus of claim 8, wherein the base station is a Long Term Evolution, LTE, Time Division Duplex, TDD, base station or an LTE-A TDD base station or an LTE Frequency Division Duplex, FDD, base station or an LTE-A FDD base station.

10. An apparatus for transmitting a downlink control channel on an antenna array comprising 8 antennas, wherein the 8 antennas are suitable for being used by a base station and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the apparatus comprising:
a port grouping module configured to virtualize the antennas in the direction of +45 degrees among the first and second pairs of dual-polarized antennas and the antennas in the direction of -45 degrees among the third and fourth pairs of dual-polarized antennas into a first port and virtualize the antennas in the direction of -45 degrees among the first and second pairs of dual-polarized antennas and the antennas in the direction of +45 degrees among the third and fourth pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

11. A base station comprising the apparatus of claim 10, wherein the base station is a Long Term Evolution, LTE, Time Division Duplex, TDD, base station or an LTE-A TDD base station or an LTE Frequency Division Duplex, FDD, base station or an LTE-A FDD base station.

12. An apparatus for transmitting a downlink control channel on an antenna array comprising 8 antennas, wherein the 8 antennas are suitable for being used by a base station and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the apparatus comprising:
a port grouping module is configured to virtualize the antennas in the direction of +45 degrees among the first and third pairs of dual-polarized antennas and the antennas in the direction of -45 degrees among the second and fourth pairs of dual-polarized antennas into a first port and virtualize the antennas in the direction of -45 degrees among the first and third pairs of dual-polarized antennas and the antennas in the direction of +45 degrees among the second and fourth pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

13. An apparatus for transmitting a downlink control channel on an antenna array comprising 8 antennas, wherein the 8 antennas are suitable for being used by a base station and comprise 4 pairs of dual-polarized antennas placed next to each other along a line, the 4 pairs of dual-polarized antennas are numbered sequentially as a first pair of dual-polarized antennas, a second pair of dual-polarized antennas, a third pair of dual-polarized antennas and a fourth pair of dual-polarized antennas, from one edge of the antenna array and ending to the other edge of the antenna array, the apparatus comprising:
a port grouping module is configured to virtualize the antennas in the direction of +45 degrees among the first and fourth pairs of dual-polarized antennas and the antennas in the direction of -45 degrees among the second and third pairs of dual-polarized antennas into a first port and virtualize the antennas in the direction of -45 degrees among the first and fourth pairs of dual-polarized antennas and the antennas in the direction of +45 degrees among the second and third pairs of dual-polarized antennas into a second port, wherein as broadcast weights of the 4 antennas of the first port, the weight of one of the antennas is +1 and the weights of the remaining three antennas are -1, or the weight of one of the antennas is -1 and the weights of the remaining three antennas are +1; and as broadcast weights of the 4 antennas of the second port, the weight of one of the antennas is +1 and the weights of the remaining three antennas are -1, or the weight of one of the antennas is -1 and the weights of the remaining three antennas are +1; and
a downlink control signal transmitting module configured to transmit a downlink control signal through the first port and the second port obtained by the port grouping module.

## Patentansprüche

1. Verfahren zur Übertragung eines Downlink-Steuerkanals auf eine Antennenanordnung mit 8 Antennen, wobei die 8 Antennen 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei jedes Paar doppelt polarisierter Antennen eine Antenne in einer Richtung von +45 Grad und eine Antenne in einer Richtung von -45 Grad aufweist, wobei das Verfahren Folgendes aufweist:
Virtualisieren, für die von einer Basisstation zur Downlink-Übertragung verwendeten 8 Antennen, des ersten und dritten Paares doppelt polarisierter Antennen in einen ersten Anschluss und Virtualisieren des zweiten und vierten Paares doppelt polarisierter Antennen in einen zweiten Anschluss (201),
wobei Sendungsgewichte der 4 Antennen des ersten Anschlusses sicherstellen, dass das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
Sendungsgewichte der 4 Antennen des zweiten Anschlusses sicherstellen, dass das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
Übertragen durch die Basisstation eines Downlink-Steuersignals durch den ersten Anschluss und den zweiten Anschluss (202).

2. Verfahren zur Übertragung eines Downlink-Steuerkanals auf einer Antennenanordnung mit 8 Antennen, wobei die 8 Antennen 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei jedes Paar doppelt polarisierter Antennen eine Antenne in einer Richtung von +45 Grad und eine Antenne in einer Richtung von -45 Grad aufweist, wobei das Verfahren Folgendes aufweist:
Virtualisieren, für die von einer Basisstation zur Downlink-Übertragung verwendeten 8 Antennen, des ersten und vierten Paares doppelt polarisierter Antennen in einen ersten Anschluss und Virtualisieren des zweiten und dritten Paares doppelt polarisierter Antennen in einen zweiten Anschluss (401),
wobei als Sendungsgewichte der 4 Antennen des ersten Anschlusses das Gewicht einer der Antennen +1 beträgt und die Gewichte der übrigen drei Antennen - 1 betragen, oder das Gewicht einer der Antennen -1 beträgt und die Gewichte der übrigen drei Antennen +1 betragen; und
als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
Übertragen durch die Basisstation eines Downlink-Steuersignals durch den ersten Anschluss und den zweiten Anschluss (402).

3. Verfahren zur Übertragung eines Downlink-Steuerkanals auf eine Antennenanordnung mit 8 Antennen, wobei die 8 Antennen 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei das Verfahren Folgendes aufweist:
Virtualisieren, für die von einer Basisstation zur Downlink-Übertragung verwendeten 8 Antennen, der Antennen in der Richtung von +45 Grad aus dem ersten und zweiten Paar doppelt polarisierter Antennen und der Antennen in der Richtung von -45 Grad aus dem dritten und vierten Paar doppelt polarisierter Antennen in einen ersten Anschluss und Virtualisieren der Antennen in der Richtung von -45 Grad aus dem ersten und zweiten Paar doppelt polarisierter Antennen und der Antennen in der Richtung von +45 Grad aus dem dritten und vierten Paar doppelt polarisierter Antennen in einen zweiten Anschluss (601),
wobei als Sendungsgewichte der 4 Antennen des ersten Anschlusses das Gewicht einer der Antennen +1 beträgt und die Gewichte der übrigen drei Antennen - 1 betragen, oder das Gewicht einer der Antennen -1 beträgt und die Gewichte der übrigen drei Antennen +1 betragen, und
als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
Übertragen durch die Basisstation eines Downlink-Steuersignals durch den ersten Anschluss und den zweiten Anschluss (602).

4. Verfahren zur Übertragung eines Downlink-Steuerkanals auf eine Antennenanordnung mit 8 Antennen, wobei die 8 Antennen 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei das Verfahren Folgendes aufweist:
Virtualisieren, für die von einer Basisstation zur Downlink-Übertragung verwendeten 8 Antennen, der Antennen in der Richtung von +45 Grad aus dem ersten und dritten Paar doppelt polarisierter Antennen und der Antennen in der Richtung von -45 Grad aus dem zweiten und vierten Paar doppelt polarisierter Antennen in einen ersten Anschluss und Virtualisieren der Antennen in der Richtung von -45 Grad aus dem ersten und dritten Paar doppelt polarisierter Antennen und der Antennen in der Richtung von +45 Grad aus dem zweiten und vierten Paar doppelt polarisierter Antennen in einen zweiten Anschluss (801),
wobei als Sendungsgewichte der 4 Antennen des ersten Anschlusses das Gewicht einer der Antennen +1 beträgt und die Gewichte der übrigen drei Antennen - 1 betragen, oder das Gewicht einer der Antennen -1 beträgt und die Gewichte der übrigen drei Antennen +1 betragen, und
als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
Übertragen durch die Basisstation eines Downlink-Steuersignals durch den ersten Anschluss und den zweiten Anschluss (802).

5. Verfahren zur Übertragung eines Downlink-Steuerkanals auf eine Antennenanordnung mit 8 Antennen, wobei die 8 Antennen 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei das Verfahren Folgendes aufweist:
Virtualisieren, für die von einer Basisstation zur Downlink-Übertragung verwendeten 8 Antennen, der Antennen in der Richtung von +45 Grad aus dem ersten und vierten Paar doppelt polarisierter Antennen und der Antennen in der Richtung von -45 Grad aus dem zweiten und dritten Paar doppelt polarisierter Antennen in einen ersten Anschluss, und Virtualisieren der Antennen in der Richtung von -45 Grad aus dem ersten und vierten Paar doppelt polarisierter Antennen und der Antennen in der Richtung von +45 Grad aus dem zweiten und dritten Paar doppelt polarisierter Antennen in einen zweiten Anschluss (1001),
wobei als Sendungsgewichte der 4 Antennen des ersten Anschlusses das Gewicht einer der Antennen +1 beträgt und die Gewichte der übrigen drei Antennen - 1 betragen, oder das Gewicht einer der Antennen -1 beträgt und die Gewichte der übrigen drei Antennen +1 betragen, und
als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
Übertragen durch die Basisstation eines Downlink-Steuersignals durch den ersten Anschluss und den zweiten Anschluss (1002).

6. Vorrichtung zur Übertragung eines Downlink-Steuerkanals auf eine Antennenanordnung mit 8 Antennen, wobei die 8 Antennen zur Verwendung durch eine Basisstation zur Downlink-Übertragung geeignet sind und 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei jedes Paar doppelt polarisierter Antennen eine Antenne in einer Richtung von +45 Grad und eine Antenne in einer Richtung von -45 Grad aufweist, wobei die Vorrichtung Folgendes aufweist:
ein Anschlussgruppierungsmodul, das zur Virtualisierung des ersten und dritten Paares doppelt polarisierter Antennen in einen ersten Anschluss und zur Virtualisierung des zweiten und vierten Paares doppelt polarisierter Antennen in einen zweiten Anschluss konfiguriert ist, wobei Sendungsgewichte der 4 Antennen des ersten Anschlusses sicherstellen, dass das Gewicht einer der Antennen +1 beträgt und die Gewichte der übrigen drei Antennen -1 betragen, oder das Gewicht einer der Antennen -1 beträgt und die Gewichte der übrigen drei Antennen +1 beträgt; und Sendungsgewichte der 4 Antennen des zweiten Anschlusses sicherstellen, dass das Gewicht einer der Antennen +1 beträgt und die Gewichte der übrigen drei Antennen - 1 betragen, oder das Gewicht einer der Antennen -1 beträgt und die Gewichte der übrigen drei Antennen +1 betragen; und
ein Downlink-Steuersignalübertragungsmodul, das zur Übertragung eines Downlink-Steuersignals durch den ersten Anschluss und den zweiten Anschluss konfiguriert ist, die durch das Anschlussgruppierungsmodul erhalten werden.

7. Basisstation mit der Vorrichtung nach Anspruch 6, wobei die Basisstation eine Long Term Evolution, LTE, Time Division Duplex, TDD, Basisstation oder eine LTE-A TDD Basisstation oder eine LTE Frequency Division Duplex, FDD, Basisstation oder eine LTE-A FDD Basisstation ist.

8. Vorrichtung zur Übertragung eines Downlink-Steuerkanals auf eine Antennenanordnung mit 8 Antennen, wobei die 8 Antennen zur Verwendung durch eine Basisstation geeignet sind und 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei jedes Paar doppelt polarisierter Antennen eine Antenne in einer Richtung von +45 Grad und eine Antenne in einer Richtung von -45 Grad aufweist, wobei die Vorrichtung Folgendes aufweist:
ein Anschlussgruppierungsmodul, das zur Virtualisierung des ersten und vierten Paares doppelt polarisierter Antennen in einen ersten Anschluss und zur Virtualisierung des zweiten und dritten Paares doppelt polarisierter Antennen in einen zweiten Anschluss konfiguriert ist, wobei als Sendungsgewichte der 4 Antennen des ersten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 beträgt; und
ein Downlink-Steuersignalübertragungsmodul, das zur Übertragung eines Downlink-Steuersignals durch den ersten Anschluss und den zweiten Anschluss konfiguriert ist, die durch das Anschlussgruppierungsmodul erhalten werden.

9. Basisstation mit der Vorrichtung nach Anspruch 8, wobei die Basisstation eine LTE TDD Basisstation oder eine LTE-A TDD Basisstation oder eine LTE FDD Basisstation oder eine LTE-A FDD Basisstation ist.

10. Vorrichtung zur Übertragung eines Downlink-Steuerkanals auf eine Antennenanordnung mit 8 Antennen, wobei die 8 Antennen zur Verwendung durch eine Basisstation geeignet sind und 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei die Vorrichtung Folgendes aufweist:
ein Anschlussgruppierungsmodul, das zur Virtualisierung der Antennen in der Richtung von +45 Grad aus dem ersten und zweiten Paar doppelt polarisierter Antennen und der Antennen in der Richtung von -45 Grad aus dem dritten und vierten Paar doppelt polarisierter Antennen in einen ersten Anschluss und zur Virtualisierung der Antennen in der Richtung von -45 Grad aus dem ersten und zweiten Paar doppelt polarisierter Antennen und der Antennen in der Richtung von +45 Grad aus dem dritten und vierten Paar doppelt polarisierter Antennen in einen zweiten Anschluss konfiguriert ist, wobei als Sendungsgewichte der 4 Antennen des ersten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
ein Downlink-Steuersignalübertragungsmodul, das zur Übertragung eines Downlink-Steuersignals durch den ersten Anschluss und den zweiten Anschluss konfiguriert ist, die durch das Anschlussgruppierungsmodul erhalten werden.

11. Basisstation mit der Vorrichtung nach Anspruch 10, wobei die Basisstation eine LTE TDD Basisstation oder eine LTE-A TDD Basisstation oder eine LTE FDD Basisstation oder eine LTE-A FDD Basisstation ist.

12. Vorrichtung zur Übertragung eines Downlink-Steuerkanals auf eine Antennenanordnung mit 8 Antennen, wobei die 8 Antennen zur Verwendung durch eine Basisstation geeignet sind und 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei die Vorrichtung Folgendes aufweist:
ein Anschlussgruppierungsmodul, das zur Virtualisierung der Antennen in der Richtung von +45 Grad aus dem ersten und dritten Paar doppelt polarisierter Antennen und der Antennen in der Richtung von -45 Grad aus dem zweiten und vierten Paar doppelt polarisierter Antennen in einen ersten Anschluss und zur Virtualisierung der Antennen in der Richtung von -45 Grad aus dem ersten und dritten Paar doppelt polarisierter Antennen und der Antennen in der Richtung von +45 Grad aus dem zweiten und vierten Paar doppelt polarisierter Antennen in einen zweiten Anschluss konfiguriert ist, wobei als Sendungsgewichte der 4 Antennen des ersten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
ein Downlink-Steuersignalübertragungsmodul, das zur Übertragung eines Downlink-Steuersignals durch den ersten Anschluss und den zweiten Anschluss konfiguriert ist, die durch das Anschlussgruppierungsmodul erhalten werden.

13. Vorrichtung zur Übertragung eines Downlink-Steuerkanals auf eine Antennenanordnung mit 8 Antennen, wobei die 8 Antennen zur Verwendung durch eine Basisstation geeignet sind und 4 Paare doppelt polarisierter Antennen aufweisen, die nebeneinander entlang einer Linie platziert sind, wobei die 4 Paare doppelt polarisierter Antennen aufeinanderfolgend als ein erstes Paar doppelt polarisierter Antennen, ein zweites Paar doppelt polarisierter Antennen, ein drittes Paar doppelt polarisierter Antennen und ein viertes Paar doppelt polarisierter Antennen von einem Rand der Antennenanordnung bis zu dem anderen Rand der Antennenanordnung nummeriert sind, wobei die Vorrichtung Folgendes aufweist:
ein Anschlussgruppierungsmodul, das zur Virtualisierung der Antennen in der Richtung von +45 Grad aus dem ersten und vierten Paar doppelt polarisierter Antennen und der Antennen in der Richtung von -45 Grad aus dem zweiten und dritten Paar doppelt polarisierter Antennen in einen ersten Anschluss und zur Virtualisierung der Antennen in der Richtung von -45 Grad aus dem ersten und vierten Paar doppelt polarisierter Antennen und der Antennen in der Richtung von +45 Grad aus dem zweiten und dritten Paar doppelt polarisierter Antennen in einen zweiten Anschluss konfiguriert ist, wobei als Sendungsgewichte der 4 Antennen des ersten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und als Sendungsgewichte der 4 Antennen des zweiten Anschlusses das Gewicht einer der Antennen +1 beträgt und die Gewichte der übrigen drei Antennen -1 betragen, oder das Gewicht einer der Antennen -1 beträgt und die Gewichte der übrigen drei Antennen +1 betragen; und
ein Downlink-Steuersignalübertragungsmodul, das zur Übertragung eines Downlink-Steuersignals durch den ersten Anschluss und den zweiten Anschluss konfiguriert ist, die durch das Anschlussgruppierungsmodul erhalten werden.

## Revendications

1. Procédé de transmission d'un canal de contrôle de liaison descendante sur un réseau d'antennes comportant 8 antennes, dans lequel les 8 antennes comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, chaque paire d'antennes à double polarisation comporte une antenne dans une direction de +45 degrés et une antenne dans une direction de -45 degrés, le procédé comportant les étapes consistant à :
pour les 8 antennes utilisées par une station de base en vue d'une transmission dans le sens descendant, virtualiser les première et troisième paires d'antennes à double polarisation dans un premier port et virtualiser les deuxième et quatrième paires d'antennes à double polarisation dans un second port (201),
dans lequel des pondérations de diffusion des 4 antennes du premier port satisfont au fait que la pondération de l'une des antennes est +1 et les pondérations des trois antennes restantes sont -1, ou la pondération de l'une des antennes est -1 et les pondérations des trois antennes restantes sont +1, et
des pondérations de diffusion des 4 antennes du second port satisfont au fait que la pondération de l'une des antennes est +1 et les pondérations des trois antennes restantes sont -1, ou la pondération de l'une des antennes est -1 et les pondérations des trois antennes restantes sont +1 ; et
la station de base transmettant un signal de contrôle de liaison descendante via le premier port et le second port (202) .

2. Procédé de transmission d'un canal de contrôle de liaison descendante sur un réseau d'antennes comportant 8 antennes, dans lequel les 8 antennes comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, chaque paire d'antennes à double polarisation comporte une antenne dans une direction de +45 degrés et une antenne dans une direction de -45 degrés, le procédé comportant les étapes consistant à :
pour les 8 antennes utilisées par une station de base en vue d'une transmission dans le sens descendant, virtualiser les première et quatrième paires d'antennes à double polarisation dans un premier port et virtualiser les deuxième et troisième paires d'antennes à double polarisation dans un second port (401),
dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1, et
en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
la station de base transmettant un signal de contrôle de liaison descendante via le premier port et le second port (402) .

3. Procédé de transmission d'un canal de contrôle de liaison descendante sur un réseau d'antennes comportant 8 antennes, dans lequel les 8 antennes comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, le procédé comportant les étapes consistant à :
pour les 8 antennes utilisées par une station de base en vue d'une transmission dans le sens descendant, virtualiser les antennes dans la direction de +45 degrés parmi les première et deuxième paires d'antennes à double polarisation et les antennes dans la direction de -45 degrés parmi les troisième et quatrième paires d'antennes à double polarisation dans un premier port et virtualiser les antennes dans la direction de -45 degrés parmi les première et deuxième paires d'antennes à double polarisation et les antennes dans la direction de +45 degrés parmi les troisième et quatrième paires d'antennes à double polarisation dans un second port (601),
dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1, et
en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
la station de base transmettant un signal de contrôle de liaison descendante via le premier port et le second port (602) .

4. Procédé de transmission d'un canal de contrôle de liaison descendante sur un réseau d'antennes comportant 8 antennes, dans lequel les 8 antennes comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, le procédé comportant les étapes consistant à :
pour les 8 antennes utilisées par une station de base en vue d'une transmission dans le sens descendant, virtualiser les antennes dans la direction de +45 degrés parmi les première et troisième paires d'antennes à double polarisation et les antennes dans la direction de -45 degrés parmi les deuxième et quatrième paires d'antennes à double polarisation dans un premier port et virtualiser les antennes dans la direction de -45 degrés parmi les première et troisième paires d'antennes à double polarisation et les antennes dans la direction de +45 degrés parmi les deuxième et quatrième paires d'antennes à double polarisation dans un second port (801),
dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1, et
en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
la station de base transmettant un signal de contrôle de liaison descendante via le premier port et le second port (802) .

5. Procédé de transmission d'un canal de contrôle de liaison descendante sur un réseau d'antennes comportant 8 antennes, dans lequel les 8 antennes comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, le procédé comportant les étapes consistant à :
pour les 8 antennes utilisées par une station de base en vue d'une transmission dans le sens descendant, virtualiser les antennes dans la direction de +45 degrés parmi les première et quatrième paires d'antennes à double polarisation et les antennes dans la direction de -45 degrés parmi les deuxième et troisième paires d'antennes à double polarisation dans un premier port et virtualiser les antennes dans la direction de -45 degrés parmi les première et quatrième paires d'antennes à double polarisation et les antennes dans la direction de +45 degrés parmi les deuxième et troisième paires d'antennes à double polarisation dans un second port (1001),
dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1, et
en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
la station de base transmettant un signal de contrôle de liaison descendante via le premier port et le second port (1002) .

6. Appareil de transmission d'un canal de contrôle de liaison descendante sur un réseau d'antennes comportant 8 antennes, dans lequel les 8 antennes sont adaptées pour être utilisées par une station de base en vue d'une transmission dans le sens descendant et comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, chaque paire d'antennes à double polarisation comporte une antenne dans une direction de +45 degrés et une antenne dans une direction de -45 degrés, l'appareil comportant :
un module de regroupement de ports configuré pour virtualiser les première et troisième paires d'antennes à double polarisation dans un premier port et virtualiser les deuxième et quatrième paires d'antennes à double polarisation dans un second port, dans lequel des pondérations de diffusion des 4 antennes du premier port satisfont au fait que la pondération de l'une des antennes est +1 et les pondérations des trois antennes restantes sont -1, ou la pondération de l'une des antennes est -1 et les pondérations des trois antennes restantes sont +1 ; et des pondérations de diffusion des 4 antennes du second port satisfont au fait que la pondération de l'une des antennes est +1 et les pondérations des trois antennes restantes sont -1, ou la pondération de l'une des antennes est -1 et les pondérations des trois antennes restantes sont +1 ; et
un module de transmission de signal de contrôle de liaison descendante configuré pour transmettre un signal de contrôle de liaison descendante via le premier port et le second port obtenus par le module de regroupement de ports.

7. Station de base comportant l'appareil de la revendication 6, dans laquelle la station de base est une station de base d'évolution à long terme, LTE, de duplex à répartition dans le temps, TDD, ou une station de base LTE-A TDD ou une station de base LTE de duplex à répartition en fréquence, FDD, ou une station de base LTE-A FDD.

8. Appareil de transmission d'un canal de contrôle de liaison descendante sur un réseau d'antennes comportant 8 antennes, dans lequel les 8 antennes sont adaptées pour être utilisées par une station de base et comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, chaque paire d'antennes à double polarisation comporte une antenne dans une direction de +45 degrés et une antenne dans une direction de -45 degrés, l'appareil comportant :
un module de regroupement de ports configuré pour virtualiser les première et quatrième paires d'antennes à double polarisation dans un premier port et virtualiser les deuxième et troisième paires d'antennes à double polarisation dans un second port, dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1 ; et en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
un module de transmission de signal de contrôle de liaison descendante configuré pour transmettre un signal de contrôle de liaison descendante via le premier port et le second port obtenus par le module de regroupement de ports.

9. Station de base comportant l'appareil de la revendication 8, dans laquelle la station de base est une station de base d'évolution à long terme, LTE, de duplex à répartition dans le temps, TDD, ou une station de base LTE-A TDD ou une station de base LTE de duplex à répartition en fréquence, FDD, ou une station de base LTE-A FDD.

10. Appareil de transmission d'un canal de contrôle de liaison descendante sur un réseau d'antennes comportant 8 antennes, dans lequel les 8 antennes sont adaptées pour être utilisées par une station de base et comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, l'appareil comportant :
un module de regroupement de ports configuré pour virtualiser les antennes dans la direction de +45 degrés parmi les première et deuxième paires d'antennes à double polarisation et les antennes dans la direction de -45 degrés parmi les troisième et quatrième paires d'antennes à double polarisation dans un premier port et virtualiser les antennes dans la direction de -45 degrés parmi les première et deuxième paires d'antennes à double polarisation et les antennes dans la direction de +45 degrés parmi les troisième et quatrième paires d'antennes à double polarisation dans un second port, dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1 ; et en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
un module de transmission de signal de contrôle de liaison descendante configuré pour transmettre un signal de contrôle de liaison descendante via le premier port et le second port obtenus par le module de regroupement de ports.

11. Station de base comportant l'appareil de la revendication 10, dans laquelle la station de base est une station de base d'évolution à long terme, LTE, de duplex à répartition dans le temps, TDD, ou une station de base LTE-A TDD ou une station de base LTE de duplex à répartition en fréquence, FDD, ou une station de base LTE-A FDD.

12. Appareil de transmission d'un canal de contrôle de liaison descendante sur un réseau d'antennes comportant 8 antennes, dans lequel les 8 antennes sont adaptées pour être utilisées par une station de base et comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, l'appareil comportant :
un module de regroupement de ports configuré pour virtualiser les antennes dans la direction de +45 degrés parmi les première et troisième paires d'antennes à double polarisation et les antennes dans la direction de -45 degrés parmi les deuxième et quatrième paires d'antennes à double polarisation dans un premier port et virtualiser les antennes dans la direction de -45 degrés parmi les première et troisième paires d'antennes à double polarisation et les antennes dans la direction de +45 degrés parmi les deuxième et quatrième paires d'antennes à double polarisation dans un second port, dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1 ; et en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
un module de transmission de signal de contrôle de liaison descendante configuré pour transmettre un signal de contrôle de liaison descendante via le premier port et le second port obtenus par le module de regroupement de ports.

13. Appareil de transmission d'un canal de contrôle de liaison descendante sur un réseau d'antennes comportant 8 antennes, dans lequel les 8 antennes sont adaptées pour être utilisées par une station de base et comportent 4 paires d'antennes à double polarisation placées les unes à côté des autres le long d'une ligne, les 4 paires d'antennes à double polarisation sont numérotées séquentiellement comme une première paire d'antennes à double polarisation, une deuxième paire d'antennes à double polarisation, une troisième paire d'antennes à double polarisation et une quatrième paire d'antennes à double polarisation, depuis un bord du réseau d'antennes et se terminant à l'autre bord du réseau d'antennes, l'appareil comportant :
un module de regroupement de ports configuré pour virtualiser les antennes dans la direction de +45 degrés parmi les première et quatrième paires d'antennes à double polarisation et les antennes dans la direction de -45 degrés parmi les deuxième et troisième paires d'antennes à double polarisation dans un premier port et virtualiser les antennes dans la direction de -45 degrés parmi les première et quatrième paires d'antennes à double polarisation et les antennes dans la direction de +45 degrés parmi les deuxième et troisième paires d'antennes à double polarisation dans un second port, dans lequel en tant que pondérations de diffusion des 4 antennes du premier port, la pondération de l'une des antennes est +1 et les pondérations des trois antennes restantes sont -1, ou la pondération de l'une des antennes est -1 et les pondérations des trois antennes restantes sont +1 ; et en tant que pondérations de diffusion des 4 antennes du second port, la pondération de l'une des antennes est +1 et les pondérations des trois antennes restantes sont -1, ou la pondération de l'une des antennes est -1 et les pondérations des trois antennes restantes sont +1 ; et
un module de transmission de signal de contrôle de liaison descendante configuré pour transmettre un signal de contrôle de liaison descendante via le premier port et le second port obtenus par le module de regroupement de ports.
